# EUROPEAN PATENT APPLICATION

(11) **EP 1 036 494 A2**
(43) Date of publication of application: **20.09.2000**
(21) Application number: 00830012.1
(22) Date of filing: 14.01.2000
(51) Int. Cl.: A01D 46/24

(54) **Interceptor apparatus for harvesting olives and hanging fruit in general mounted on an agricultural vehicle**

(30) Priority: 22.01.1999 IT RM990047
(71) Applicant: Temperoni, Nazzareno, 06050 Collazzone (PG) (IT)
(72) Inventor: Temperoni, Nazzareno, 06050 Collazzone (PG) (IT)
(74) Representative: Lanzoni, Luciano

(57) **Abstract**

The present invention relates to an interceptor apparatus for harvesting olives and hanging fruit in general, mounted on an agricultural vehicle such as a tractor (1) or a trailer, comprising an intercepting surface constituted by two distinct movable sheets (3; 4), able to be associated to two related rotating pole devices set parallel side by side, for housing, arranging, unwinding and winding, mounted preferably superposed. The devices individually include a sheet-carrying pole (30, 40) pivotingly mounted on two end arms (70, 71; 72, 73) connected to a movable beam (80; 81) and set in rotating motion by motor means. The movable beams (80; 81) of the two devices are slidingly mounted on a fixed beam (10) on opposite parts to be moved by means of motor means and motion transmitting means in mutually opposite directions thereby increasing their overall longitudinal projection.

## Description

The present invention relates to an interceptor apparatus for harvesting olives and hanging fruit in general, such as almonds, walnuts, hazelnuts, cherries, pistachio nuts. It therefore pertains to the agricultural mechanisation industry. For the sake of convenience, the function of the subject invention, unless expressly indicated otherwise, shall be referred to the harvesting of olives.

Currently, for harvesting olives a single movable sheet is laid underneath the tree, sheet which is destined to be walked upon and has the purpose of intercepting olives falling by detachment induced, for instance manually, through vibration, shaking, or lashing.

Each movable sheet presents a slit which cuts it from the median point of one of its sides to the centre of its surface. This tear or slit is destined to let the tree trunk pass through, which trunk shall be set against the apex of the slit (centre of the intercepting surface) so that the sheet, laid on the ground, covers the ground projection of all branches developed around the trunk.

It should further be considered that the dimensions of the vegetative development of trees is highly differentiated even for plants of the same species, based on bio-diversity, on the age of the plants, on the characteristics of the soil, on pruning techniques, on any pathologies or mutilations.

After the laying of the sheet, it will be necessary to proceed with reducing the slit, superposing in the best possible manner the two edges that form the opening. It will also be necessary to obtain projecting borders along the perimeter of the sheet to prevent olives from overflowing.

If the olives are detached with shaker machines or with lashing systems, the surface of the movable sheet must be larger than if the olives are detached manually. However, the more the surface of the sheet increases, the more its weight will grow and the more difficult it will be to open it, lay it underneath the tree, fold it back whilst collecting the intercepted ppoleuct, then move it, also manually, from one plant to the next.

Consequently, a significant portion of the time saved by employing mechanical instruments to detach the olives is then wasted in the greater burden required to move the intercepting sheet.

To overcome the drawback inherent in moving the sheets manually, according to a known technology the sheet has the side opposite the one divided by the slit, made fast to a motorised sheet-holding pole, housed on a self-moving mechanical complex which maintaining it parallel to the ground allows its rotation in the two directions, respectively determining the unfurling and furling of the sheet itself. Special carriages, drawn by tractors, have long been available, structured on one or more axes provided with tyres, characterised by an enormous length, for they have to support the sheet-holding pole destined to house and move the movable sheet and necessarily positioned longitudinally with respect to the direction of advance of the carriage itself.

Simultaneously with the unfurling of the sheet by means of the rotation of the pole in its direction of lengthening, the intervention of two operators is required: each of the operators, having grabbed the part of the side divided by the slit, appropriately reinforced with a rigid strip, drag the sheet itself underneath the tree until setting the trunk against the apex of the slit which corresponds to the centre of the intercepting surface.

Once the olive detachment operations are completed, the rotation of the sheet-bearing pole in the opposite direction to the previous one causes the movable sheet to be furled back. In this phase, the caught ppoleuct, lying on the intercepting surface, after overtaking the rotating mass falls to the other side, proceeding into an appropriate channel positioned below and parallel to the sheet-bearing pole and naturally of equal length relative thereto.

Also during the re-furling of the sheet, two workers shall need to sustain it by grabbing each the portion of the side divided by the slit, accompanying it until it is completely furled. During the final phase of the furling operation, the workers shall have to lift the strips that delimit the side divided by the slit and keeping them nearly parallel to the rotating sheet-bearing pole they shall have to take them above the height reached by the rotating mass to allow the intercepted ppoleuct to pass above it and hence to fall, to the opposite side, into the underlying channel.

From the above concept, ever more enhanced versions have been obtained, all however severely limited by structural and functional deficiencies which prevent their use from becoming widespread, illustrated below.

The carriage that houses the sheet-bearing pole has, necessarily, an enormous longitudinal development imposed by the size of the pole itself, which, obviously, cannot be shorter than the side of the sheet hinged thereon, which in turn is at least eight meters long. Consequently, the carriage measures no less than eight meters in length but that is not all. Once it is hitched to be drawn by the tractor, the overall longitudinal size exceeds ten meters, causing considerable problems in transit on country lanes and in particular in the access and movement in fields where difficulties are insurmountable in spaces which are not suitable for the excessive dimensions of the machine.

Moreover, in furling the movable sheet back around the rotating pole, the intercepted product has to pass above the cylindrical mass generated by the sheet furled around the pole itself, to be recovered subsequently in an appropriate stable channel. The channel, necessarily as long as the rotating pole and longitudinally set down underneath it, shall also be provided with devices for concentrating and off-loading the product. Such structural burdens entail a suitable strength of the load-bearing frame, leading to a considerably heavier machine whose gravity discharged on the ground by the modest bearing surface of the tyres not only harmfully compacts the ground, but also causes severe and insurmountable manoeuvring problems due to the precarious grip of the tyres on the ground, especially on sloped soils, poorly able to bear loads by effect of the rains, typical of the olive harvesting season.

The overall size of the mechanical equipment rarely allows to position the machine correctly underneath the plant, taking into account that in correspondence with sloped soils, in order to prevent the fruit from flowing out of the intercepting surface, the sheet-bearing pole should always be positioned downhill from the tree and transversely with respect to the slope of the soil.

Further, the movable sheet, once laid on the ground and centred underneath the tree, in order to prevent the intercepted product to flow out, shall need manual adjustments, substantially consisting of obtaining upward projecting edges along the perimeter and, in particular, on the downhill margins, if the terrain is sloped. Since olive groves are generally planted on hilly soils, such projecting edges must assume the structure of barriers.

In addition, the amplitude of the intercepting surface is fixed. Therefore, in the presence of trees with minimal dimensions needless wastes of time are incurred in moving intercepting surfaces that are oversized with respect to the actual needs which, among other drawbacks, are a hindrance to olive detachment techniques.

Given the height of the sheet-bearing pole relative to the ground the operators, during the furling phase, shall inconveniently sustain it in the side opposite the one connected to the pole, accompanying it in its progressive furling until all the product has passed, as described above. During the terminal phase the operators, at least two plus the one who actuates the sheet-bearing pole are forced greatly to raise the strips that delimit the side of the sheet divided by the slit and to maintain them nearly parallel to the pole, simultaneously bearing the weight of the intercepted product.

The aim of the present invention therefore is to eliminate the aforementioned drawbacks present in the process of intercepting the fruit falling by induced detachment from the producer plant, and during the subsequent phases.

The invention, as it is characterised by the claims that follow, solves the problem of providing an interceptor apparatus for harvesting olives and similar hanging fruit mounted on an agricultural vehicle, such as a tractor, a trailer or a semi-trailer, of the kind with movable sheet, secured in one of its sides to a sheet-bearing pole of an unfurling and furling device, whose intercepting surface, able to be walked upon, is destined to be laid on the ground under a tree to be subjected to operations for the rapid detachment of the olives, which from a general point of view is characterised in that it comprises an intercepting surface constituted by two distinct movable sheets, associated to two related devices for housing, positioning, unfurling and furling the movable sheets with movable pole, which, mounted side by side according to parallel horizontal axes on an agricultural vehicle, singularly include a sheet-bearing pole pivotingly mounted on two end arms connected to a movable beam set in rotation by motor means; the movable beams of the two devices being mounted so as to be able to slide on a fixed beam on opposite sides to be moved by motor means and motion transmission means in mutually opposite directions thereby being able to vary in the field the overall longitudinal disposition of the apparatus.

In a preferred embodiment, such devices allow the rotating poles to effect, individually or simultaneously with each other, a rapid longitudinal sliding motion, also in both directions, each travelling a segment of the respective original longitudinal projection. The longitudinal measure of the apparatus shifts from that of minimum disposition, compatible with size requirements when moving, to greater dimensioning suitable for operations. The intercepting surface can also be varied in the transverse direction through the greater or lesser unfurling of the movable sheets. Hence, the measurements of the intercepting surface can be accurately chosen, both in the longitudinal and in the transverse direction, based on actual requirements, with the deriving savings in terms of time and resources.

Advantageously, in a preferred embodiment, each of the two movable sheets presents the side opposite to the one secured to the respective sheet-bearing pole, fastened to a rigid gripping strip destined to be sustained by a ground operator. The portion of each movable sheet proximate to the rigid gripping strip and median relative thereto has an opening wherefrom a funnel-shaped sleeve or the like originates downwards. Through this sleeve the intercepted fruit shall pass into appropriate crates which may be stored on a metal platform whose perimeter is delimited by boards, borne by a rear or front lifter of the same tractor, which serves as a container for the initial accumulation of the harvested product. As shall become readily apparent hereafter, the harvested product can also be deposited directly from the sheets into the initial accumulation container.

One of the advantages obtained by means of the present invention essentially consists in the fact that, while respecting the mother plants and the fallen fruit absolutely, it assures the maximum possible level of automation, minimising execution times and direct manual interventions.

Moreover, the invention allows a considerable enhancement to harvesting productivity, attainable with minimal use of human resources, with low labour costs.

The interceptor apparatus proposed is highly versatile in use, as it can be conveniently used with an method and/or mechanical tool for the rapid detachment of the fruit, from the solely manual one to fixed or dynamic aids, to advanced trunk or branch shakers or vibrators.

The interceptor apparatus according to the invention meets requirements for agility and reliability on impervious, sloped terrain and on soils incapable of bearing large weights, and in modern cultivations with a high number of trees per unit of surface area, consequently presenting very reduced spaces for the travel and manoeuvres of machines.

Further features and advantages of the present invention shall become more readily apparent from the detailed description that follows, of a preferred embodiment illustrated purely by way of non-limiting indication in the accompanying schematic drawings wherein:
- Figure 1 shows a front view of the interceptor apparatus according to the invention on the related tractor, in its disposition of minimum size;
- Figure 2 shows a front view of the interceptor apparatus of Figure 1 in operative position for laying the intercepting surface;
- Figure 3 shows a side view of the interceptor apparatus of Figure 1 in a phase wherein the movable sheets are readied around a plant;
- Figure 4 shows a top plan view of the interceptor apparatus of Figure 3;
- Figure 5 shows a side view of the interceptor apparatus in an operative phase;
- Figure 6 shows a top plan view of the interceptor apparatus in the phase wherein the movable sheets are furled.

In accordance with the present invention, in the figures the reference number 1 indicates a tractor, taken as an example of a vehicle or trailer whereon an interceptor apparatus indicated in its entirety as 2 is to be positioned. On the same tractor can be mounted a tool for the rapid detachment of fruit, such as a shaker, not shown. It should be kept in mind that the embodiment illustrated by way of example is a machine with a low final cost destined to small-medium companies operating in the agricultural industry of the Umbria region in Italy.

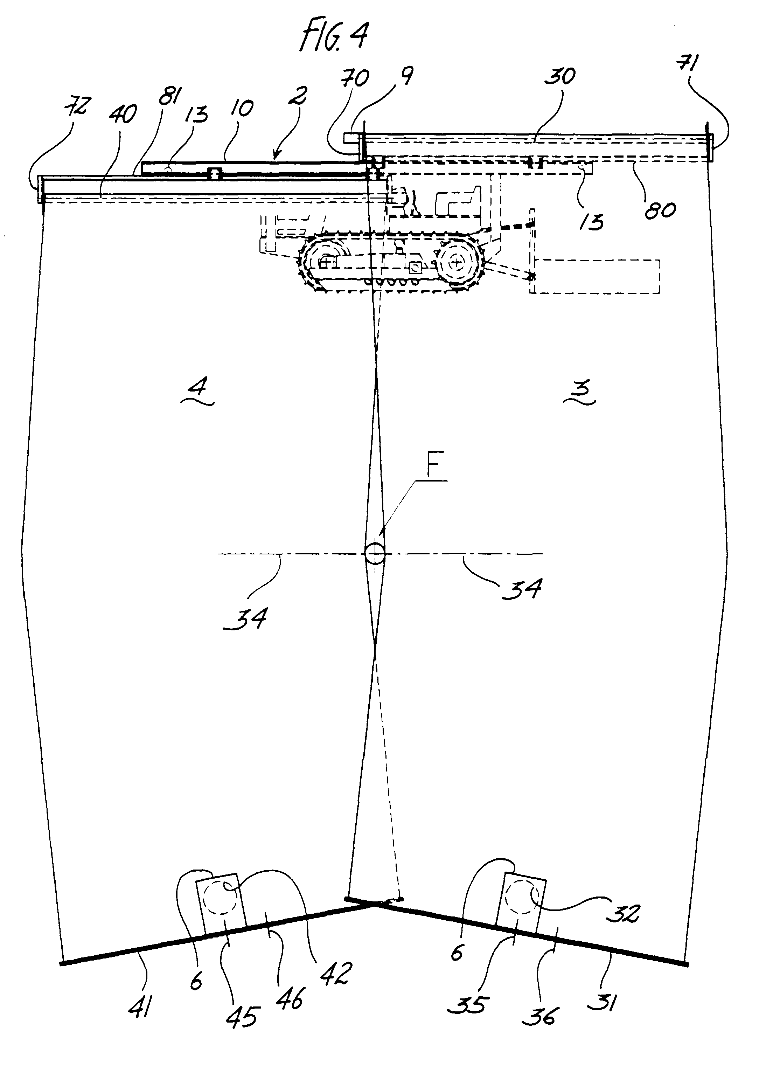

With initial reference to Figure 4, wherein the tractor is shown with dashed lines solely to provide an indication of its positioning, the primary element, i.e. the intercepting surface, is shown, materially expressed by two movable sheets 3, 4, preferably identical, destined to be laid on the ground underneath the tree. In the described embodiment they have rectangular development with individual dimensions of 10 x 4.15 meters.

Each of the sheets 3, 4 has one of the lesser sides longitudinally secured to an appropriate sheet-bearing pole 30, 40, which, rotating, will completely furl the related sheet around itself reducing it to a cylindrical mass, whilst by rotating in the opposite direction it will unfurl it, every time the machine will move from a plant to another. Each sheet 3, 4 laid and set down on the ground is able to withstand being walked upon by personnel; the same sheet, moreover, shall be able to retain the intercepted olives, describing modest superficial projections along the two greater sides, aimed at preventing the olives from overflowing.

The side opposite the one secured to the respective rotating pole 30, 40 of the sheets 3, 4 is integral over its entire length to a rigid strip 31, 41 (Figure 4), made of resistant and light material to favour its manual grip by the operator, who, after gripping it in the median longitudinal segment, will assist the actuation of the movable sheet.

Each movable sheet, of a material suitable to be walked upon, preferably presenting an intercepting surface that is as smooth as possible, could be advantageously reinforced laterally by ropes or belts (not shown in detail herein), secured at an extremity to the rigid gripping strip and at the other to the rotating sheet-bearing pole, which facilitate its actuation. In this way the sheet shall present a natural concavity between the ropes themselves, which will optimise it function as a container of the product.

Each movable sheet can be reinforced by transverse semi-rigid strips (not shown herein) or by flexible concatenations of rigid elements, suitably distanced, which, though susceptible to flex to a moderate extent - useful to improve the effectiveness of the sheet in containing the product - will be able to withstand contraction and relaxation, to give strength to the intercepting surface in order to favour its actuation and furling around the rotating pole. The strips or concatenation, of such a thickness as not to increase excessively the thickness of the cylindrical mass wound on the sheet-bearing pole, shall be provided on the face destined to come in contact with the ground.

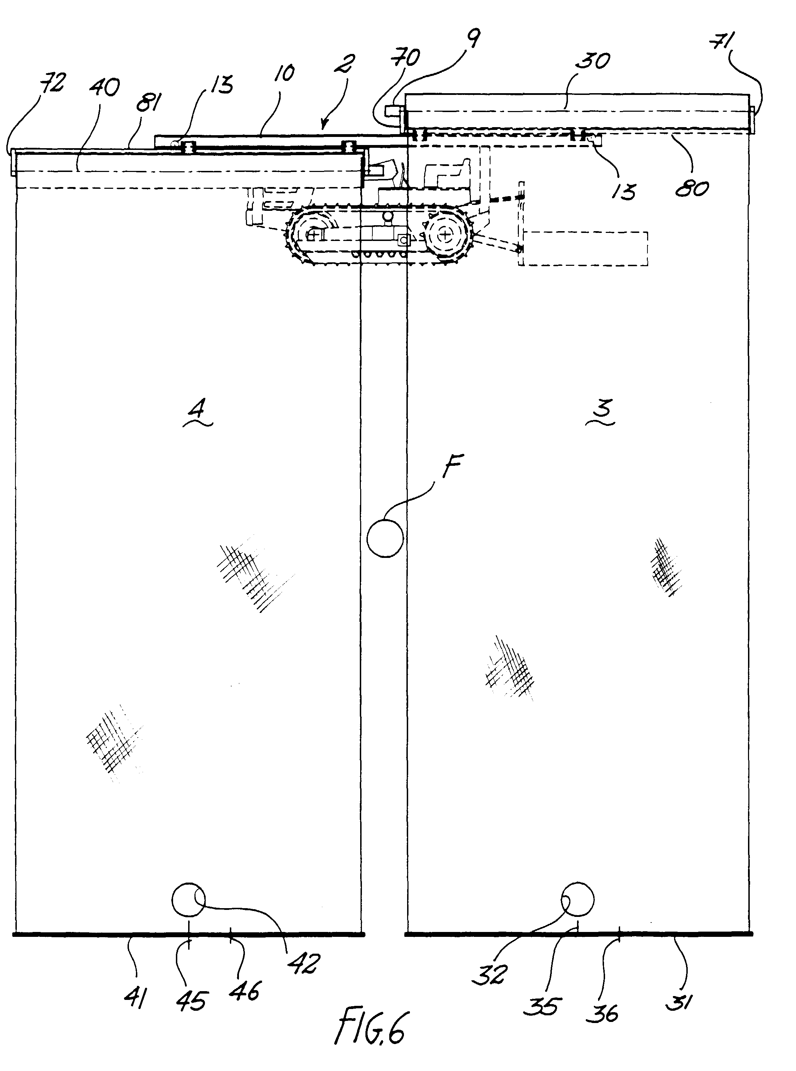

In the preferred embodiment each movable sheet 3, 4 presents, in proximity to the gripping strip 31, 41 and in median position, at least an opening 32, 42 for access to a collecting sleeve 43 (the sleeve 33 is not visible in Figure 5), constituted by a cylindrical or truncated cone-shaped structure also made of flexible material similar to that of the sheet itself, with terminal outlet, which will allow the olives to move quickly from the surface of the sheet into appropriate storage container, such as the one indicated as 5 in Figure 5 and set down on the ground.

To prevent the olives, during the intercepting phase, from falling directly over the openings and hence to drop to the ground through the collecting sleeve before the latter is positioned by the operator above the appropriate container, a movable flap can be provided, indicated as 6, 6 in Figures 4 and 5, secured to the gripping strip 31, 41, which when the sheet is laid on the ground, extends over the opening 32, 42 covering it completely. As shown in Figure 4, each of the two movable sheets 3, 4 is advantageously provided with a tear or slit 34, 44 which, originating from the median point of the greater side contiguous with the homologous sheet, will cut the first sheet transversely, for about half its length. The tear or slit 34, 44, which can be easily obtained and, obviously, reclosed equally rapidly with related closure means, is destined, in marginal situations, to receive the trunk of the tree which shall be caught between the two edges of the slit. The tears or slit, in the number of one or more, may be provided in only one of the two movable sheets or in both. At the base of the tear, a manual rapid securing and releasing device (not shown) may be provided, which in that point divides the peripheral chord of the sheet, if provided. The two edges of the slit that cuts the intercepting surface may be joined, as closure means, by a zipper (not shown) able to be opened by manually driving the buckle towards the apex of the slit itself. In correspondence with the intercepting plane, the zipper can be covered by a protective band longitudinally secured to the contiguous margin of the portion of the movable sheet. On the opposite face of the intercepting plane, at the margins of the slit, elastic strips can be provided on one sides and buttons on the other (not shown), through which the operator can gradually reduce the opening tightening the opposite edges of the sheet around the tree trunk. It should be specified that use of the tear or slit is limited to operative situations connected to trees characterised by very extensive trunks or with two or more trunks whereas, in normal case, the mere superposition of the contiguous edges of the two sheets is able to assure, obviously with greater rapidity, an effective intercepting and containing action on the falling olives.

With reference to Figure 4, the numbers 35, 45 indicate median points of the rigid gripping strips 31, 41 wherein an articulation is provided (not shown herein) for folding in the form of a compass the two resulting parts of each strip obtainable by means of a modest rotation in opposite directions of the two parts themselves in the terminal phase of the furling of the sheet. Such V folding of each rigid gripping strip with the upwards movement of the extremities facilitates the passage of the olives with their subsequent outflow through the collecting sleeve. The numbers 36, 46 indicate the points wherein a control terminal for the remote activation of the interceptor apparatus is located. The control terminal, not shown herein, can be for instance a remote control operating with radio waves, with wires or otherwise.

In the interceptor apparatus according to the invention the two rotating poles 30, 40, in the form of tubes possibly reinforced by a core, can be shaped as drums, if they are provided, at the ends, with metal disks serving to check the sheets.

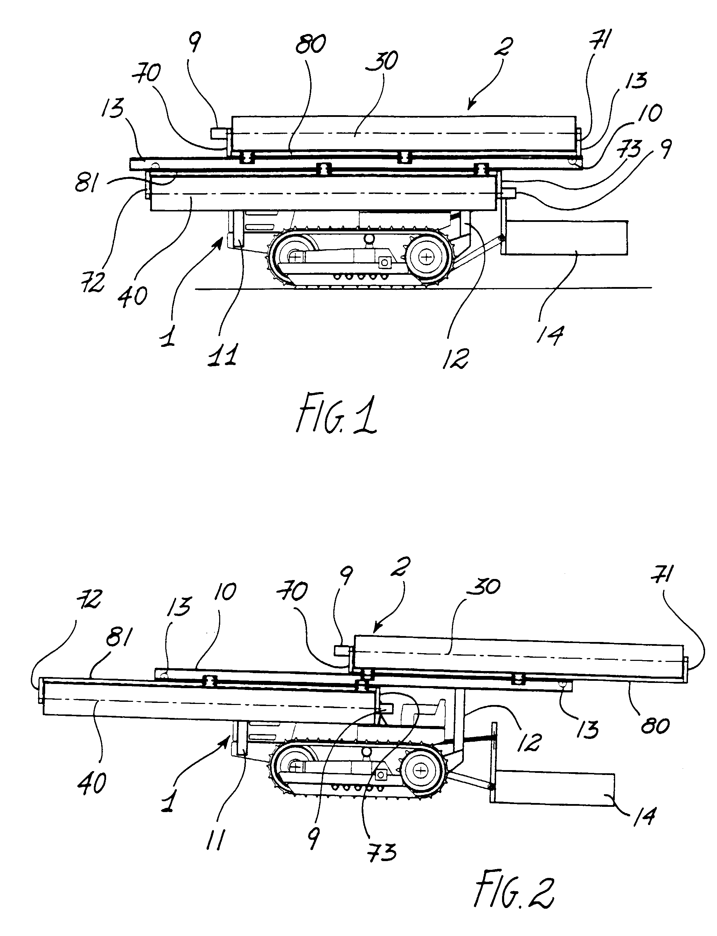

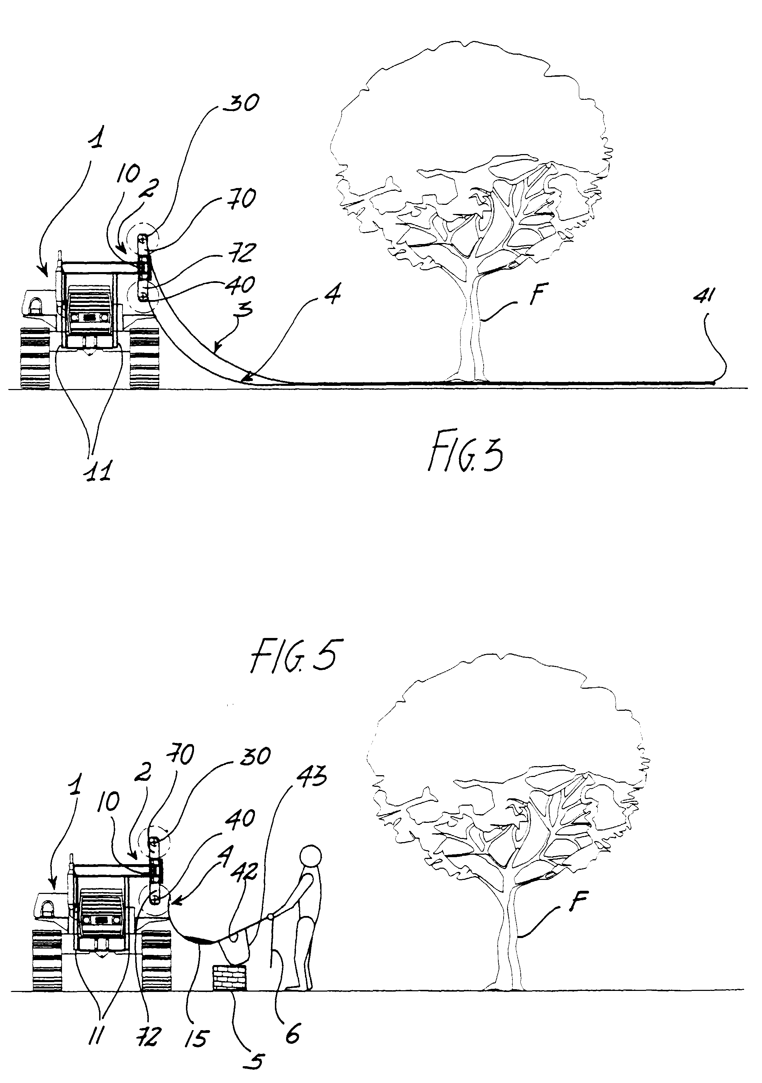

Referring in particular to Figures 1 and 2, the poles 30, 40 are hinged at their ends to two arms, respectively indicated as 70, 71, 72, 73 integral with a sliding beam, indicated as 80, 81. The hinging and housing mechanisms allow the rotation of the two poles in the two directions, thanks to an end motor 9, for instance a hydraulic motor.

The hinging and housing mechanisms are preferably maintained in correspondence with two distinct longitudinal alignments mutually superimposed, above a side of the tractor. Such mechanisms, in addition to allowing the furling poles to effect an autonomous rotation of the poles in the two directions about the respective axes, allow them to effect a longitudinal sliding motion, also in both directions. For this purpose each of the two sliding beams 80, 81 is mounted on a corresponding guide of a fixed beam 10, in correspondence with the opposite parallelograms oriented upwards and downwards.

The fixed beam 10, orienting the two opposite sliding guides, one upwards and the other one downwards, is sustained on the tractor by a related bridge structure schematically represented by uprights 11, 12.

As shown in Figure 1, in the resting position the two sliding beams 80, 81, are positioned in mutual superposition and longitudinally centred relative to the fixed beam 10 in such a way as to minimise the length of the interceptor apparatus. From this position, wherein the movable sheets 3, 4 are completely furled around the poles 30, 40, the two sliding beams 80, 81, through the motorised actuation powered by the tractor and commanded by the operator, effect a longitudinal sliding motion on the fixed beam 10 in mutually opposite directions, and more specifically, in an embodiment, the lower beam in the direction of advance of the tractor and the upper beam in the opposite direction.

The measure of the longitudinal sliding of the movable beams 80, 81 determines the dimension of a side of the intercepting surface to an operative condition, shown in Figure 4, which has a minimal superposition of the two movable sheets around a trunk F. The beams can be made to stop sliding automatically by means of limit switches. However, the size of the intercepting surface can be set in relation to the vegetative development of each individual tree to be treated, differentiating the sliding of the movable beams 80, 81. Moreover, as stated above, the intercepting surface and be varied also in the measure of its length by furling the sheets of the rotating poles to a greater or lesser extent.

For their sliding motion, the sliding beams 80, 81 are provided with a rack (not shown herein) whereto is engaged a gear wheel 13 moved by a hydraulic motor rigidly connected to the fixed beam 10 and powered by the pressurised fluid provided by the tractor, as the hydraulic motors 9 that actuate the rotation of the poles 30, 40. Conventionally, and thus not shown, each hydraulic motor is connected to the central power supply and control unit with two suitably positioned flexible hoses of adequate length, for instance wound in a storage mechanism provided with elastic transfer and return means.

Both the hydraulic motors that actuate the sliding beams and the other two that move the rotating poles must have a power output suitable for the actual requirements, rotating in the two directions at an appropriate speed for the technical-functional needs, possibly adjustable when it is first installed or at the start of the working day. Moreover, the motors associated to the rotating poles must usefully be able to rotate at variable speed, adjusted by means of control terminals positioned on rigid gripping strips.

All four motors shall stop upon request or automatically, remaining secured in position. This condition is necessary to prevent the movable beams from sliding by inertia when the tractor is travelling and to assure the recovery of the olives from the movable sheets, during which operation, in the terminal phase of the furling of the sheets, the rotatory motion of the sheet-bearing pole shall be stopped to allow its longitudinal sliding in order to position the outlet of each sheet above the container destined to receive the product.

A borne platform with side boards, used as an accumulation container for the product, can be provided on an anterior and/or posterior lifter of the tractor itself (it is indicated as 14 in Figures 1 and 2). It can house appropriate crates with holed walls, so that the product, in addition to being able to be dropped directly into the platform, may be packaged in the individual crates more suitable for fruit preservation.

The command and control instrumentation can also be provided at the driver's position of the tractor, so that the tractor operator can also control the hydraulic motors, and hence the sliding of the beams and the rotation of the poles.

The operation of the interceptor apparatus according to the invention is illustrated hereafter, in the illustrated embodiment wherein it is mounted on the left side of the tractor 1.

The tractor operators approaches the tree, orienting the left side towards it, and stops the tractor when the axis of the tree trunk is located in the central plane normal to the two rotating poles. In correspondence with sloping terrain, typical of olive groves, the poles are always positioned downhill and transversely relative to the slope of the terrain, thereby constituting a natural containment barrier for the olives in correspondence with the side of the intercepting surface that is more prone to overflow conditions.

The tractor operator proceeds with unfurling and extending the movable sheets, making the poles rotate counter-clockwise, if the tractor is viewed from the rear, until the rigid gripping strips are reachable by operators on the ground. The borne platform is set down on the ground by means of the control lever of the hydraulic lifter.

If the tractor operator is not aided by other workers, he/she descends from the vehicle and grips the median segment of the rigid strip. Acting on the appropriate control terminal, the tractor operator can correct the longitudinal sliding of the movable beam or of both beams, to the extent required (in their condition of maximum extension, the interior extremities of the poles always remain overlapping, for instance by about 30 cm), then without detaching his/her hands from the grip he/she initiates the unfurling of the sheet, simultaneously taking it underneath the tree, always to the necessary extent imposed by the development of the plant. The position of the funnel-shaped sleeves (indicated with reference number 43 in Figure 5) shall preferably be far from the falling trajectory of the olives to prevent the olives from dropping directly onto the ground, if the cover 6 for the sleeves is not provided. Then the sheets are left set down on the ground (Figure 3).

In the presence of trees characterised by two or more trunks, or by very large and highly irregular trunks, the effectiveness of the intercepting surface can be improved through the use of one or more tears or slits 34, 44 (Figure 4).

After placing the tear or tears or slits in the suitable position relative to the trunk or trunks, by adjusting the extent of unfurling of the movable sheets from the respective rotating poles, the operator acts manually on the rapid detachment devices and on the zippers causing the slit or slits to open, then, after inserting the trunk between the two edges thereof he/she will secure it by means of the elastic loops and the buttons positioned on the lower face of the sheet taking care to place the aforesaid device in a position contrasting with the tree trunk in a projecting portion with respect to the adjacent portions of the sheet in contact with the ground.

At this point the operations for the rapid detachment of the hanging olives can begin, by any method and mechanical instrument.

Once the rapid detachment of the fruit is complete, the operator frees the tree trunk or trunks from the tears or slits, then definitively closes said tears or slits by closing the zippers and lastly secures the rapid interruption mechanism of the peripheral longitudinal chord or chords of the movable sheets.

Consequently, having gripped the rigid gripping strip of the movable sheet relating to the upper pole in the median longitudinal point, he/she will raise it upwards to hand height, about a meter off the ground, causing the olives accumulated on the portion of the movable sheet adjacent to the rigid gripping strip (and hence also on the protective flap of the opening) to flow towards the interior and more sloped part of the sheet.

At this point, as shown in Figure 1, the operator can rotate towards him/herself the movable flap protecting the opening, freeing said opening for the off-loading of the intercepted product. Now the same operator, without having to take his/her hands off the rigid strip or to modify his/her grip, initiates the appropriate rotatory motion of the sheet-bearing pole, by means of the terminal conveniently accessible to his/her fingers, simultaneously accompanying the movable sheet in its progressive furling. Prior to this operation, the operator has to cause the longitudinal axis of the movable sheet to return perpendicular to the sheet-bearing pole, relative to the deviated position shown in Figure 4. This can be obtained by moving the tractor, or by acting on the longitudinal sliding of the sheet-bearing pole.

More simply, due to requirements connected to the proper stowage of the sheets, it is necessary for each gripping strip 3, 4 to be taken by the operator to a parallel position relative to the corresponding horizontal rotating pole so that each sheet, during its furling, remains normal between the two elements delimiting its opposite sides.

For this purpose, in the position of maximum longitudinal travel allowed in the opposite directions, the two movable beams 80, 81, remain distanced, in correspondence with the respective interior extremities, by a space which, in the furling of the sheets themselves, will allow to overcome the hindrance provided by the tree trunk and consequently to place and maintain in normal axis the sheets themselves relative to the related horizontal rotating pole (Figure 6).

With the presence of a second operator or by him/herself, the operator performs the same furling operation with the movable sheet related to the lower pole. The product accumulated on the surface of each sheet will gradually flow, by gravity, towards the sloping points of the sheet itself between the sheet-bearing pole and the rigid gripping strip sustained by the operator, forming a sack in contact with the ground.

The downhill positioning of the furling poles relative to the area to be protected underneath the tree alleviates the operators' effort in furling the poles loaded with olives.

In the final phase of furling of the sheet, the sack, ever more pronounced by effect of the progressive concentration of the fruit, will come off the ground (as indicated with reference number 15 in Figure 5) bearing down, on one side, on the sheet-bearing pole and on the other on the rigid gripping strip held by the operator at about one meter off the ground. As furling progresses, the sack will become more accentuated narrowing in correspondence with the portion of the sheet itself that is proximate and median relative to the rigid gripping strip. At this point the same operator involved with actuating the movable sheet relating to the upper pole, if necessary, after stopping the rotatory motion of the pole, may command the longitudinal sliding of the related movable beam in a such a direction as to position the outlet of the funnel-shaped sleeve above the container destined to house the product (Figure 5). The product passes through the outlet into the crate which is stowed on the platform.

In the phase immediately preceding the passage of the product into the opening, the operator, without modifying his/her grip on the rigid strip, by means of the simultaneous rotation in opposite directions of the two segments thereof divided by the articulation mechanism located between one hand and the other, activates the articulation causing the upwards projection of the ends of the two segments, to facilitate the outflow of the fruit into the appropriate opening. The phases described above for the upper movable sheet are repeated for the lower one by the same operator or by another one.

To overcome marginal situations requiring intercepting surfaces of vast proportions (walnut, almond, cherry trees, olive trees of large size, etc.) the interceptor apparatus of the present invention is suitable to be employed, rapidly and without additional structures, in combination with another homologous one, housed on a second tractor.

In practice, modifications and/or improvements are obviously possible without thereby departing from the scope of the claims that follow.

## Claims

1. Interceptor apparatus for harvesting olives and handing fruit in general mounted on an agricultural vehicle, such as a tractor, a trailer or a semi-trailer, of the kind with movable sheet, secured in one of its sides to a sheet-bearing pole of an unfurling and furling device, whose intercepting surface, able to be walked upon, is destined to be laid onto the ground underneath a tree to be subjected to operations of rapid detachment of the fruit, characterised in that it comprises an intercepting surface constituted by two distinct movable sheets (3; 4), associated to two related devices for housing, positioning, unfurling and furling the movable sheets with rotating poles, devices which, mounted side by side according to horizontal parallel axes on an agricultural vehicle (1), individually include a sheet-bearing pole (30; 40) pivotingly mounted on two end arms (70, 71; 72, 73) connected to a movable beam (80; 81) and actuated in rotation by motor means; the movable beams (80; 81) of the two devices being slidingly mounted on a fixed beam (10) at opposite sides to be actuated by means of motor means and motion transmitting means in mutually opposite directions thereby allowing to vary the overall longitudinal disposition of the apparatus in the field.

2. Interceptor apparatus according to claim 1, characterised in that said parallel horizontal axes of said two devices are situated one above the other.

3. Interceptor apparatus according to claim 1, characterised in that said motor means are hydraulic motors and said motion transmitting means are rack transmission means.

4. Interceptor apparatus according to claim 1, characterised in that each individual sheet (3; 4) presents the side opposite the one secured to the respective sheet-bearing pole (30; 40) fastened over its entire length to a rigid gripping strip (31; 41) for a ground operator.

5. Interceptor apparatus according to claim 4, characterised in that said rigid gripping strip (31; 41) is provided (in 36, 46) with a terminal for the remote control of the interceptor apparatus.

6. Interceptor apparatus according to claim 4, characterised in that said rigid gripping strip (31; 41) centrally presents (in 35; 45) an articulation joint.

7. Interceptor apparatus according to claim 4, characterised in that each of the two movable sheets (3; 4) presents, in proximity to the rigid gripping strip (31; 41) an opening (32; 42) communicating with a lower collecting sleeve (43).

8. Interceptor apparatus according to claim 7, characterised in that a flap (6) is provided for covering the opening (32; 42) of the sleeve secured to said rigid strip (31; 41).

9. Interceptor apparatus according to claim 1, characterised in that at least one of said movable sheets (3; 4) presents a slit (34; 44) for housing the tree trunk, whereto are associated related closure means.
